# EUROPEAN PATENT SPECIFICATION

(11) **EP 4 414 173 B1**
(45) Date of publication and mention of the grant of the patent: **01.04.2026**
(21) Application number: 24156433.5
(22) Date of filing: 07.02.2024
(51) Int. Cl.: B32B 38/06, B29C 51/08, B29C 51/10, B32B 3/26, B64C 1/40, G10K 11/172

(54) **CONTINUOUS MANUFACTURING METHOD OF ACOUSTIC TRANSMISSION LOSS PANELS WITH RESONATOR NETWORK CORES**
KONTINUIERLICHES HERSTELLUNGSVERFAHREN VON AKUSTIKÜBERTRAGUNGSVERLUSTFELDERN MIT RESONATORNETZWERKKERNEN
PROCÉDÉ DE FABRICATION EN CONTINU DE PANNEAUX DE PERTE DE TRANSMISSION ACOUSTIQUE AVEC DES COEURS DE RÉSEAU DE RÉSONATEUR

(30) Priority: 08.02.2023 US 202363444081 P; 15.01.2024 US 202418412859
(43) Date of publication of application: 14.08.2024
(73) Proprietor: B/E Aerospace, Inc., Winston-Salem, NC 27105 (US)
(72) Inventor: WINKLER, Julian, East Hartford, CT 06118 (US); KUCZEK, Andrzej E., East Hartford, CT 06118 (US)
(74) Representative: Dehns

(56) References cited:
- WO-A1-2022/157440
- JP-A- S60 244 523

## Description

### TECHNICAL FIELD

The present invention generally relates to aircraft sidewalls, and more specifically to aircraft sidewalls with features for noise and thermal isolation.

### BACKGROUND

Low-cost acoustic transmission loss panels are needed to reduce aircraft cabin interior noise transmitted from exterior (through the fuselage) or from internal cabin noise sources. Cabin noise impacts the comfort and health of personnel occupying the space during travel. In many instances there is no or insufficient paneling to reduce the noise level inside the cabin and provide thermal insulation. Therefore, it would be advantageous to provide a device, system, and method that cures the shortcomings described above.

WO 2022/157440 A1 relates to a method for continuously manufacturing a panel with multiple complex acoustic elements for an acoustic attenuation structure, the method comprising supplying a thermoplastic resin film at the inlet of a drawing system comprising at least one pair of complementary cylinders, heating said thermoplastic resin film upstream of the inlet of the drawing system, and passing said thermoplastic resin film between said at least one pair of complementary cylinders, said pair of complementary cylinders comprising a male cylinder having teeth projecting radially from the cylinder and a female cylinder having cavities on its radial surface, the cavities of the female cylinder having shapes that match the shapes of the teeth of the male cylinder, and separating the drawn film at the outlet of the drawing system by means of a separator arranged at the outlet of the drawing system between the drawn film and the female cylinder.

JP S60244523 A discloses an apparatus for molding an undulating shaped sheet.

### SUMMARY

According to an aspect, a method as recited in claim 1 is disclosed.

In some aspects, the techniques described herein relate to a method, wherein the film includes a plastic material; wherein receiving the roll of the film includes unwinding and heating the film above a glass transition temperature of the film; wherein the first roller and the second roller cool the film below the glass transition temperature.

In some aspects, the techniques described herein relate to a method, wherein the plurality of protrusions and the plurality of dimples define a shape of the plurality of resonator chambers; wherein the shape of the plurality of resonator chambers includes one of hemisphere shape, a truncated-cone shape, or a right n-agonal frustrum.

In some aspects, the techniques described herein relate to a method, including pulling a vacuum on the film in the plurality of dimples.

In some aspects, the techniques described herein relate to a method, including defining a plurality of holes in the roll of film subsequent to forming the plurality of resonator chambers.

In some aspects, the techniques described herein relate to a method, wherein the plurality of holes are defined in the roll of film by one of punching out or laser drilling the plurality of holes.

In some aspects, the techniques described herein relate to a method, wherein the plurality of resonator chambers and the plurality of holes are in a centered rectangular lattice.

In some aspects, the techniques described herein relate to a method, wherein the plurality of holes are defined in a top surface of the plurality of resonator chambers.

In some aspects, the techniques described herein relate to a method, wherein the resonator core is attached to the sidewall by one of a weld or an adhesive bond.

In some aspects, the techniques described herein relate to a method, wherein the plurality of interconnect features are disposed around a circumference of the first roller and the second roller, wherein the plurality of interconnect features form the plurality of interconnections longitudinally along the resonator core between the plurality of resonator chambers.

In some aspects, the techniques described herein relate to a method, wherein the plurality of interconnect features are disposed along a length of the first roller and the second roller, wherein the plurality of interconnect features form the plurality of interconnections laterally along the resonator core between the plurality of resonator chambers.

### BRIEF DESCRIPTION OF THE DRAWINGS

Implementations of the concepts disclosed herein may be better understood when consideration is given to the following detailed description thereof. Such description makes reference to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 depicts a perspective view of an aircraft, in accordance with one or more embodiments of the present disclosure.
FIG. 2A depicts a perspective view of an acoustic panel, in accordance with one or more embodiments of the present disclosure.
FIG. 2B depicts a side view of an acoustic panel, in accordance with one or more embodiments of the present disclosure.
FIG. 2C depicts a side view of an acoustic panel with a bulk material in a gap between a sidewall and a resonator core, in accordance with one or more embodiments of the present disclosure.
FIG. 3 depicts a dynamic model of a resonator core in response to acoustic waves, in accordance with one or more embodiments of the present disclosure.
FIG. 4A depicts a perspective view of a resonator core, in accordance with one or more embodiments of the present disclosure.
FIG. 4B depicts a perspective view of a resonator core, in accordance with one or more embodiments of the present disclosure.
FIG. 4C depicts a front view of a resonator core, in accordance with one or more embodiments of the present disclosure.
FIG. 4D depicts a rear perspective view of a resonator core, in accordance with one or more embodiments of the present disclosure.
FIG. 5A depicts a perspective view of unit cell of a resonator core, in accordance with one or more embodiments of the present disclosure.
FIG. 5B depicts a cross-section view of an acoustic panel with a unit cell of a resonator core between sidewalls, in accordance with one or more embodiments of the present disclosure.
FIG. 6A depicts a hemispheric shaped resonator chamber of a unit cell of a resonator core, in accordance with one or more embodiments of the present disclosure.
FIG. 6B depicts a truncated-cone shaped resonator chamber of a unit cell of a resonator core, in accordance with one or more embodiments of the present disclosure.
FIG. 6C depicts a right octagonal frustrum shaped resonator chamber of a unit cell of a resonator core, in accordance with one or more embodiments of the present disclosure.
FIG. 7A depicts a perspective view of a resonator core with hemispheric shaped resonator chamber connected by interconnections and with holes in a centered rectangular lattice, in accordance with one or more embodiments of the present disclosure.
FIG. 7B depicts a front view of a resonator core with circular, triangular, and prism shaped holes, in accordance with one or more embodiments of the present disclosure.
FIG. 8A depicts a flow diagram of a method, in accordance with one or more embodiments of the present disclosure.
FIG. 8B depicts manufacturing steps of a method, in accordance with one or more embodiments of the present disclosure.
FIG. 8C depicts a perspective view of rollers rotating to continuously form resonator chambers in a film, in accordance with one or more embodiments of the present disclosure.
FIG. 8D depicts a front view of rollers rotating to continuously form resonator chambers in a film, in accordance with one or more embodiments of the present disclosure.
FIG. 9A depicts a flow diagram of a method, in accordance with one or more embodiments of the present disclosure.
FIG. 9B depicts manufacturing steps of a method, in accordance with one or more embodiments of the present disclosure.
FIG. 9C depicts a film during steps of a method, in accordance with one or more embodiments of the present disclosure.
FIG.10A depicts a perspective view of rollers with interconnect features around a circumference forming longitudinal interconnects in a resonator core, in accordance with one or more embodiments of the present disclosure.
FIG.10B depicts a perspective view of rollers with interconnect features along a length forming lateral interconnects in a resonator core, in accordance with one or more embodiments of the present disclosure.
FIG.10C depicts a perspective view of rollers with interconnect features around a circumference and along a length forming longitudinal and lateral interconnects in a resonator core, in accordance with one or more embodiments of the present disclosure.

### DETAILED DESCRIPTION OF THE INVENTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details are set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

Reference will now be made in detail to the subject matter disclosed, which is illustrated in the accompanying drawings. Embodiments of the present disclosure are generally directed to a continuous manufacturing method of an acoustic transmission loss panel resonator core. The acoustic panel is a double-wall panel construction with two sidewall panels and a resonator core. The resonator core is attached to the second sidewall. The resonator core defines an air gap between the resonator core and the first sidewall. The resonator core includes interconnected resonator chambers. The resonator chambers may include a variety of shapes. The resonator chambers are continuously formed from a single sheet and then bonded to the second sidewall.

U.S. Patent US10302252B2, titled "Container having an internal structure with minimum surfaces"; U.S. Patent Publication US2022/0366888A1, titled "Acoustic panel for noise attenuation"; U.S. Patent Publication US20220366886A1, titled "Aircraft acoustic panel"; U.S. Patent US8708878B2, titled "Functional roll incorporating a structure of a lattice-shaped fluid (gas-liquid) guidepath"; U.S. Patent US11414858B2, titled "Two-way acoustic panel"; U.S. Patent Publication US20210354844A1, titled "Method for using contour correct thermoplastic core in bonded acoustic panel assembly"; U.S. Patent Publication US20160368586A1, titled "Production method for producing a load-bearing fuselage panel and fuselage panel producible therewith"; U.S. Patent US10414481B2, titled "Method for forming a structural panel"; U.S. Patent US9884440B2, titled "Roll fed flotation/impingement air ovens and related thermoforming systems for corrugation-free heating and expanding of gas impregnated thermoplastic webs"; U.S. Patent US9296185B2, titled "Method for joining thermoplastic polymer material"; U.S. Patent Publication US20210059872A1, titled "Sheet, device for manufacturing sheet, and method for manufacturing sheet"; are referred to herewith.

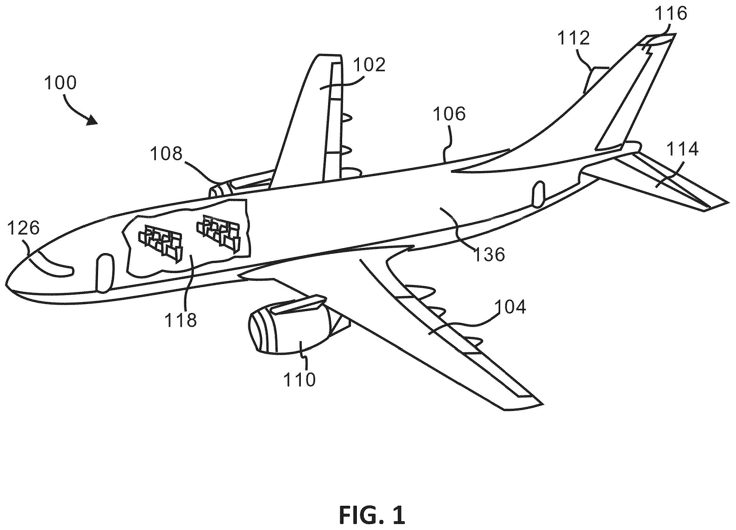

Referring now to FIG. 1, an aircraft 100 is described, in accordance with one or more embodiments of the present disclosure. The aircraft 100 is an example of a passenger or transport vehicle in which noise attenuation systems may be implemented in accordance with various embodiments. In an illustrative embodiment, the aircraft 100 has a starboard wing 102 and a port wing 104 attached to a fuselage 106. The aircraft 100 also includes a starboard engine 108 connected to the starboard wing 102 and a port engine 110 connected to the port wing 104. The aircraft 100 also includes a starboard horizontal stabilizer 112, a port horizontal stabilizer 114 and a vertical stabilizer 116. The aircraft 100 also includes various cabin sections, including, for example, a first cabin section 118. The aircraft 100 may also include a galley sections, pilot cabin 126, and the like.

In these illustrative examples, noise attenuation systems, in accordance with various embodiments, may be implemented within or attached to various components of the aircraft 100. In various embodiments, a noise attenuation panel or acoustic panel may be incorporated into one or more of the walls, doors or panels the make up the various cabin sections (e.g., a wall section 136 of the fuselage 106 that surrounds the cabin sections). In various embodiments, the acoustic panel may also be incorporated into sound generating equipment, such as, for example, equipment located in a galley section or the like.

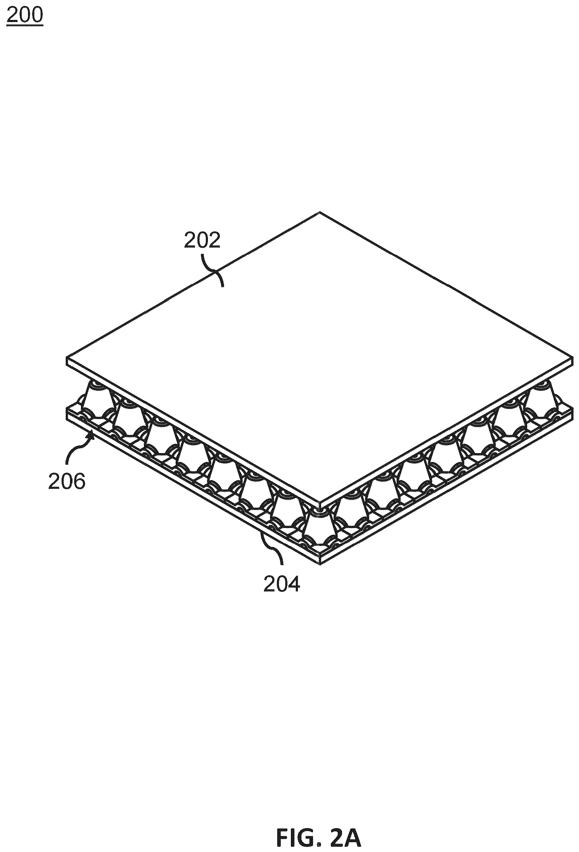

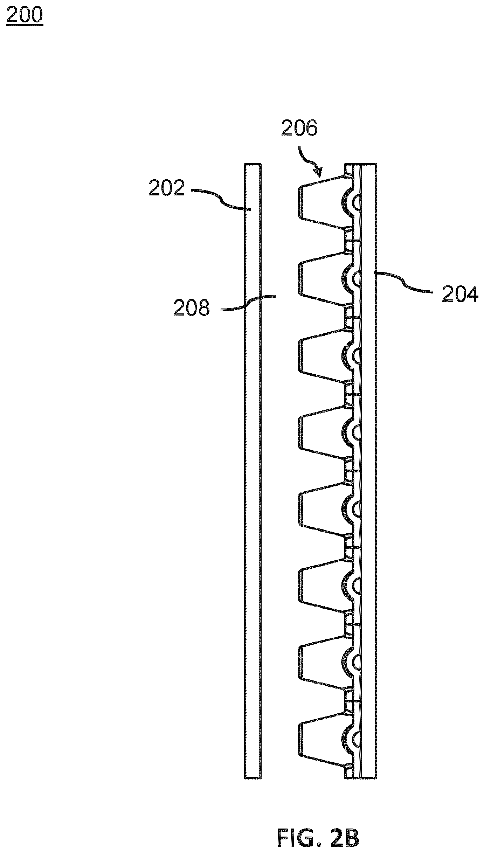

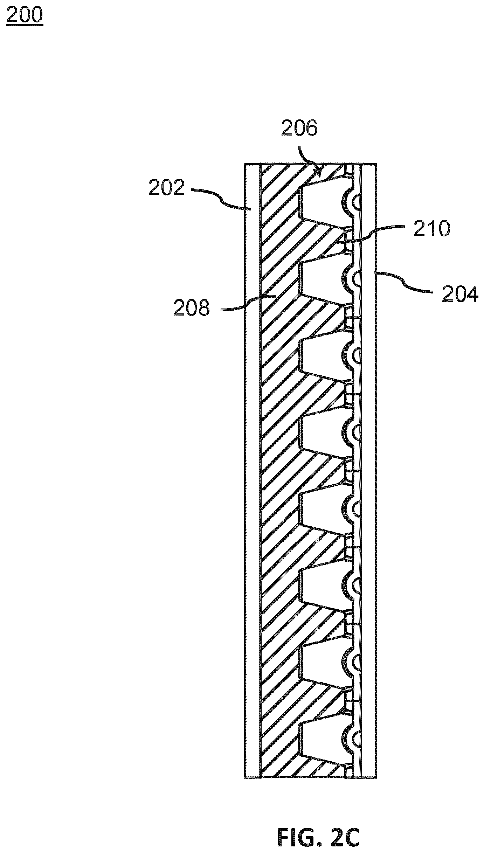

Referring now to FIGS. 2A-2C, an acoustic panel 200 is described, in accordance with one or more embodiments of the present disclosure. The acoustic panel 200 is a double-wall panel construction. The acoustic panel 200 may include one or more components, such as, but not limited to, a first sidewall 202, a second sidewall 204, a resonator core 206, a bulk material 210, and the like.

The acoustic panel 200 may include the first sidewall 202. The first sidewall 202 may be configured as a planar sheet. The first sidewall 202 may extend laterally and longitudinally along a plane (e.g., an x-y plane). The first sidewall 202 may also include a thickness (e.g., a thickness in a z-axis). In embodiments, the first sidewall 202 may be the fuselage 106 of the aircraft 100.

The acoustic panel 200 may include the second sidewall 204. The second sidewall 204 may also be configured as a planar sheet. The second sidewall 204 may extend laterally and longitudinally along a plane (e.g., an x-y plane). The plane of the second sidewall 204 may be offset from the plane of the first sidewall 202. The second sidewall 204 may also include a thickness (e.g., a thickness in a z-axis). The thickness of the second sidewall 204 may be substantially equal to or different than (e.g., greater than or less than) the thickness of the first sidewall 204.

In embodiments, the first sidewall 202 and the second sidewall 204 may be connected or joined. For example, the acoustic panel 200 may include one or more struts (not depicted). The first sidewall 202 and the second sidewall 204 may be connected or joined by the one or more struts.

The acoustic panel 200 may include the resonator core 206. The resonator core 206 may be a single sheet, as opposed to a multi-layer resonator. The resonator core 206 may be attached to the second sidewall 204. For example, the resonator core 206 may be attached to the second sidewall 204 by a weld, an adhesive bond, or the like. The resonator core 206 may be disposed between the first sidewall 202 and the second sidewall 204. In this regard, the first sidewall 202 and the second sidewall 204 may be skin surfaces between which the resonator core 206 is sandwiched.

The first sidewall 202, the second sidewall 204, and/or the resonator core 206 may be made of a material. The material may include, but is not limited to, a polymer (e.g., thermoplastic or thermoset), a fiber reinforced matrix (e.g., fiberglass composite, carbon fiber composite, aramid fiber composite, composite reinforced by any combination of glass, carbon, aramid or other fibers, etc.), or a combination thereof. The first sidewall 202, the second sidewall 204, and/or the resonator core 206 may be made of the same material and/or may be made of different materials. In embodiments, at least the second sidewall 204 and the resonator core 206 are made of a thermoplastic polymer. Some examples may include a polymer or polymer matrix composite as the base material for the structure of the container. Such materials may include the advantage of lighter weight and an increased resistance to corrosion. One example includes sheet molding compound and using compression molding to fabricate the individual layers or pieces, which are then secured together using adhesive bonding. Fusion bonding may be used in embodiments that include thermoplastic matrix materials, such as PEEK and PEI. With fusion bonding, the polymer chains tend to inter-diffuse across the interface between pieces under heat and after cooling consolidation, the polymer chains are intertwined across the interface resulting in the bond line disappearing and an improved ability to transfer loads through the joint.

The acoustic panel 200 may extend laterally and longitudinally along a plane (e.g., an x-y plane). In this regard, the acoustic panel 200 may be flat. The resonator core 206 may extend laterally and longitudinally along the plane (e.g., an x-y plane). The resonator core 206 has a vertical thickness, which extends vertically from the plane (e.g., a z-thickness). The vertical thickness of the resonator core 206 may be substantially greater than the vertical thickness of the first sidewall 202 and/or second sidewall 204. It is further contemplated that, the acoustic panel 200 may be curved and/or follow an undulating geometry, such as a curvature. For example, the acoustic panel 200 may be arcuate, cylindrical, conical, or tapered. The first sidewall 202, the second sidewall 204, and/or the resonator core 206 may similarly include the curvature. For example, the acoustic panel 200 may be arcuate where the first sidewall 202 is the fuselage 106 of the aircraft 100.

The first sidewall 202, the second sidewall 204, and/or the resonator core 206 may be bonded together or cured or otherwise formed together, but mechanical fastening may also used in some applications. The resonator core 206 may tie the first sidewall 202 and the second sidewall 204 together structurally and can form a very rigid, efficient and lightweight structure.

In embodiments, the acoustic panel 200 may define a gap 208. The gap 208 may be defined between the first sidewall 202 and the resonator core 206. In embodiments, the gap 208 may be filled with air, such that the gap 208 may be referred to as an airgap.

In embodiments, the acoustic panel 200 may include the bulk material 210. The bulk material 210 may also be referred to as a bulk absorber. The bulk material 210 may be disposed in the gap 208. The bulk material 210 may include, but is not limited to, foam, aerogel, or the like.

In embodiments, the acoustic panel 200 may follow a flat profile. In embodiments, the acoustic panel 200 may follow a curved profile. For example, the first sidewall 202, the second sidewall 204, and the resonator core 206 may be curved to conform to a curved profile of the fuselage 106 of the aircraft 100. In embodiments, the first sidewall 202, the second sidewall 204, and/or the resonator core 206 may be flexible to conform to the curved profile.

The acoustic panel 200 may include acoustic properties selected by perforating one or more of the first sidewall 202, the second sidewall 204, and/or the resonator core 206 with specifically sized holes. The holes may enable the resonator core 206 to act like individual Helmholtz or quarter-wave resonators that attenuate a certain tone or tones, at specific frequencies or wavelengths.

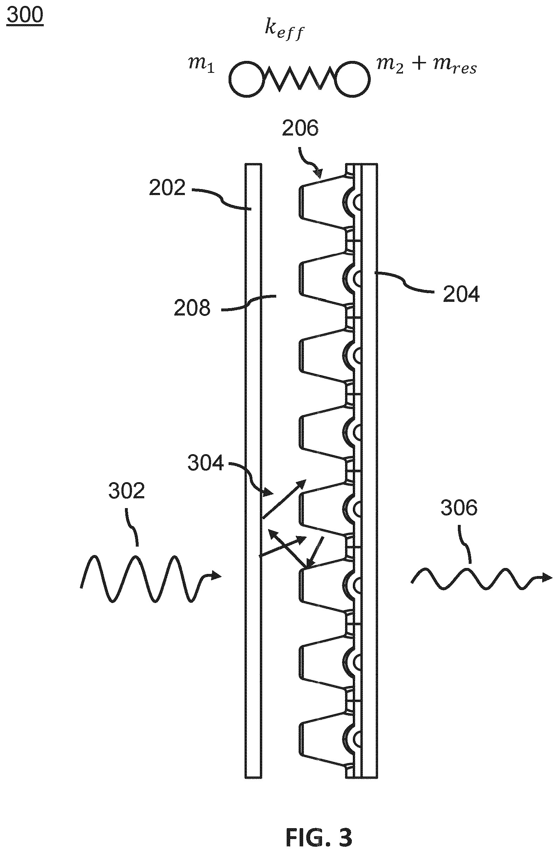

Referring now to FIG. 3, a model 300 is described, in accordance with one or more embodiments of the present disclosure. The model 300 may approximate the behavior of the acoustic panel 200. In embodiments, the acoustic panel 200 may damp or attenuate acoustic waves or energy.

In embodiments, the acoustic panel 200 may receive one or more acoustic waves 302. The acoustic waves 302 may be generated from a variety of sources. The acoustic waves 302 may impinge on the first sidewall 202. The acoustic waves 302 may be transmitted to the gap 208 through vibrations of the first sidewall 202. The acoustic waves may pass through the gap 208 and impinge on the resonator core 206. The acoustic waves may then reflect between the resonator core 206 and the first sidewall 202 as internal reflections 304. The second sidewall 204 may then output an acoustic wave 306 to free space. Vibrations of the second sidewall 204 from the internal reflections 304 may cause the second sidewall 204 to output the acoustic wave 306. The acoustic wave 306 may be attenuated below the acoustic wave 302. In this regard, the acoustic panel 200 may mitigate noise through absorption or transmission loss.

The resonator core 206 may act as a fluid resonator. The resonator core 206 may have one or more volumes (e.g., resonator chambers 504) and connections (e.g., interconnections 506) between the volumes. The volumes may be tuned to absorb the sound. Sound absorption may occur in the resonator chambers 504. In particular, the sound absorption may occur in the holes 508 defined in the top surface 512 of the resonator chambers 504. For example, an orifice on a neck of the resonator chamber 504 may connect the resonator to the gap 208 between the first sidewall 202 and the second sidewall 204. The volume of the resonator chambers 504 may control the absorption at one or more frequencies of the acoustic wave. The volume of the resonator chambers 504 may be increased or decreased to achieve absorption at the desired frequency.

The model 300 may approximate the behavior of the acoustic panel 200 via a dynamic system including a mass (m1), a mass (m2), a mass (mres), and a stiffness (keff). The mass (m1) represents the mass of the first sidewall. The mass (m2) represents the mass of the second sidewall. The mass (mres) represents the mass of the resonator core 206. The acoustic panel 200 may achieve an effective stiffness (keff). The resonator core 206, together with the gap 208, may determine the effective stiffness (keff) between the first sidewall 202 and the second sidewall 204. The effective stiffness (keff) with the acoustic panel 200 including the resonator core 206 may be different from the stiffness of acoustic panels without the resonator core 206. In this regard, the resonator core 206 may be beneficial for attenuating acoustic waves. The resonator core 206 may add one or several additional resonances. The additional resonances may control the absorption and improve the acoustic dampening performance of the acoustic panel 200. The additional resonances may be understood in terms of the effective stiffness (keff). In some instances, the effective stiffness (keff) may be frequency dependent. In this regard, the effective stiffness may vary with the frequency of the acoustic waves. The resonator core 206 may change the effective stiffness of the gap 208. The resonator core 206 may reduce the sound transmission from the first sidewall 202 to the second sidewall 204.

The gap 208 may increase the attenuation of the acoustic panel 200. For example, the gap 208 may provide a resonance chamber between the first sidewall 202 and the resonator core 206. Similarly, the bulk material 210 may increase the attenuation of the acoustic panel 200 by attenuating the internal reflections 304 between the first sidewall 202 and the resonator core 206.

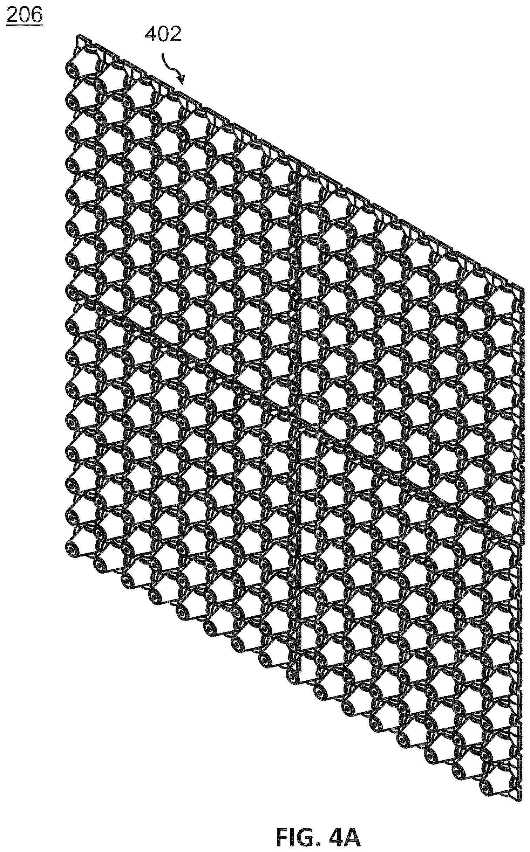

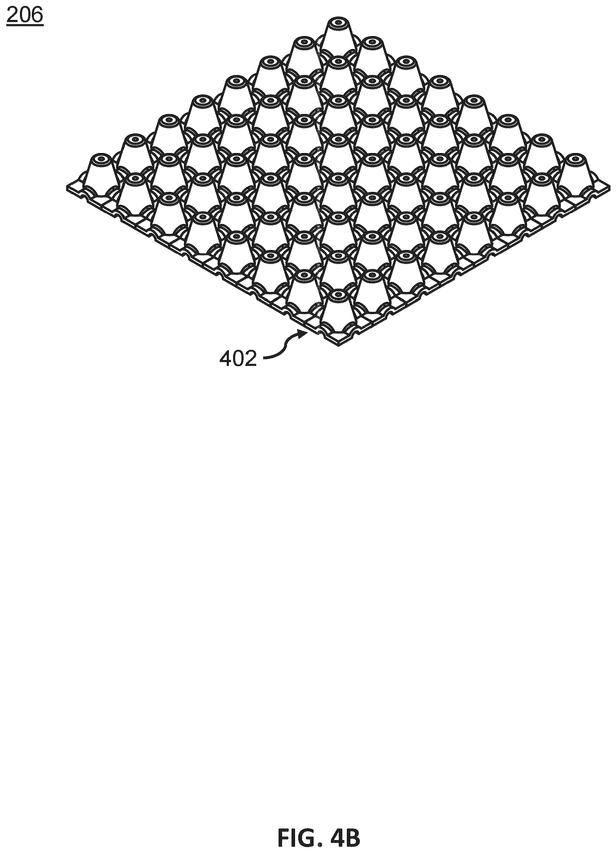

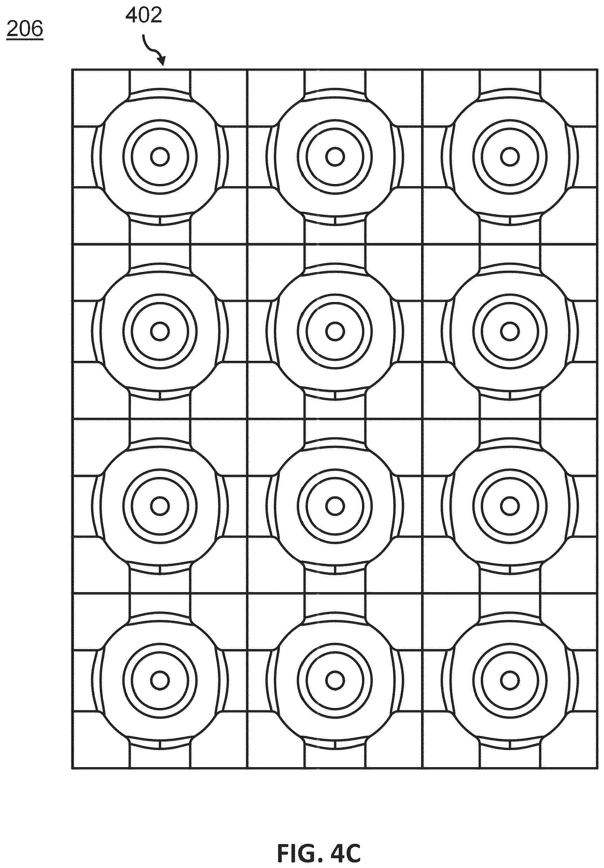

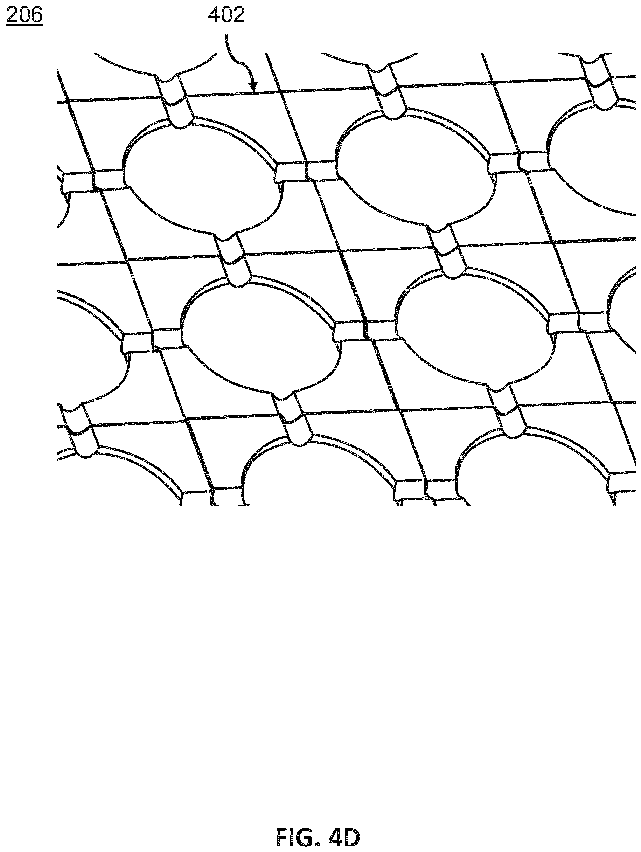

Referring now to FIGS. 4A-4D, the resonator core 206 is described, in accordance with one or more embodiments of the present disclosure. The resonator core 206 may include unit cells 402. The unit cells 402 may be connected to adjacent unit cells in a periodic arrangement. For example, the resonator core 206 may include a grid pattern of the unit cells 402. The grid pattern may also be referred to as a rectangular lattice. The resonator core 206 may include an N×M structure of the unit cells 402, where N is an integer number of the unit cells 402 in a first direction (e.g., along the x-axis) and M is an integer number of the unit cells 402 in a second direction (e.g., along the y-axis). N and M may include any integer numbers of unit cells 402, based on the desired dimensions of the resonator core 206 in the x-y plane.

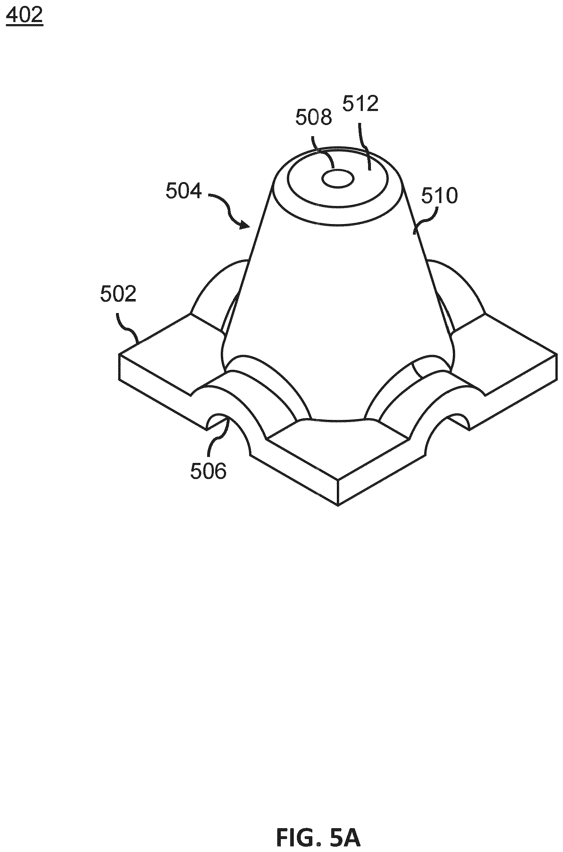

Referring now to FIGS. 5A-5B, the unit cells 402 are described, in accordance with one or more embodiments of the present disclosure. The unit cells 402 may include one or more structural features, such as, but not limited to, a planar surface 502, a resonator chamber 504, interconnections 506, and the like.

The resonator chamber 504 may include one or more sidewalls 510. The sidewalls 510 may extend from the planar surface 502. In this regard, the sidewalls 510 may be projections from the planar surface 502. The resonator chamber 504 may include a top surface 512. The top surface 512 may extend from the sidewalls 510. The top surface 512 may also be referred to as a neck. The resonator chamber 504 may define a hole 508. The hole 508 may be defined in the top surface 512 of the resonator chamber 504. The sidewalls 510 may define the holes 508 in an apex of the top surface 512. The hole 508 may allow air to pass to and from the resonator chamber 504. For example, the hole 508 may allow the air to pass between the gap 208 and the resonator chamber 504. The hole 508 may also be referred to as a neck hole.

The resonator chambers 504 may form a rectangular lattice in the resonator core 206. The rectangular lattice may refer to the positioning of the resonator chambers 504 in the resonator core 206. Resonator chambers 504, and similarly the unit cells 402, may be positioned symmetrically along the width and length of the resonator core 206. The resonator chambers 504 may be positioned from adjacent resonator cores based on the distance between the center of the resonator chamber 504 (e.g., the center of the hole 508) to the center of the adjacent resonator chamber.

The resonator chamber 504 of the unit cells 402 are in fluid communication with one or more resonator chambers of the adjacent unit cells. The interconnections 506 may be between the resonator chambers 504. The interconnections 506 fluidically couple the resonator chamber 504 with adjacent resonator chambers. The number of the interconnections 506 may control the number of the fluidic couplings. The unit cells 402 may include between zero and four of the interconnections 506. Although the unit cells 402 have been described as including the interconnections 506, this is not intended as a limitation of the present disclosure. The resonator chamber 504 may act as a single Helmholtz resonator when not interconnected to adjacent resonator chambers.

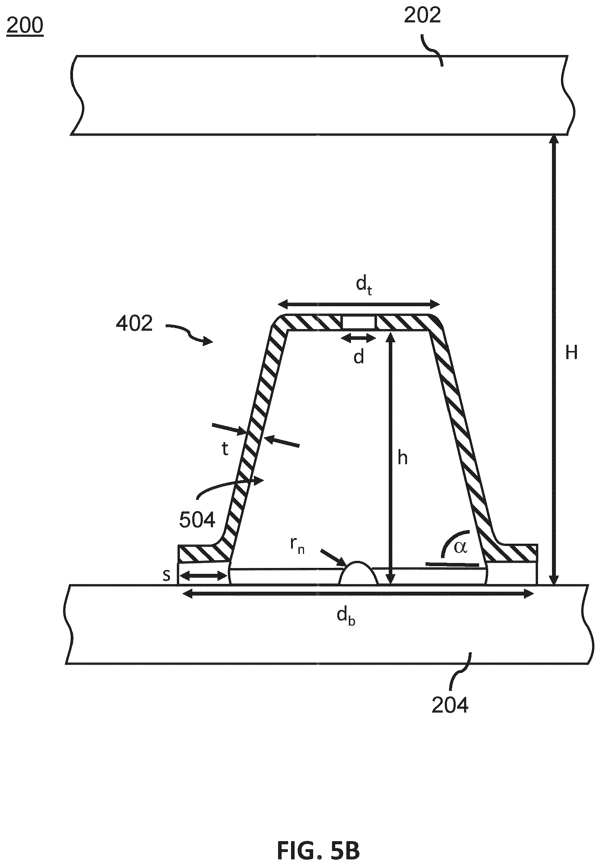

Referring now in particular to FIG. 5B, acoustic panel 200, the resonator core 206, the unit cells 402, and/or the resonator chamber 504 may be defined by one or more parameters. The parameters may include, but are not limited to, a thickness (t) of the resonator chamber 504, a width (d_{b}) of a base of the resonator chamber 504, a width (dₜ) of a top of the resonator chamber 504, a width (d) of the hole 508 defined in the top surface 512 of the resonator chamber 504, a height (h) of the resonator chamber 504, an angle (α) between the planar surface 502 and the sidewalls 510 of the resonator chamber 504, a height (H) between the first sidewall 202 and the second sidewall 204, a radius (rₙ) of the interconnections 506, and/or a length (s) of the interconnections 506.

The width (d_{b}), the width (dₜ), and the height (h) may control a volume of the resonator chamber 504. The radius (rₙ) and the length (s) may control a volume of the interconnections 506.

In embodiments, the acoustic panel 200 may be designed to attenuate one or more frequencies. The acoustic panel 200 may be designed to attenuate the frequencies based on the volume (h, d_{b}, dₜ), resonator neck (d, t), interconnections 506 (s, rₙ), filling ratio (~h/H), and the like.

In embodiments, any of the various parameters may vary from cell-to-cell of the resonator core 206. In this regard, the unit cell 402 may or may not be uniform across the resonator core 206.

In embodiments, the height (h) may be between 15 percent and 95 percent of the height (H). **In** embodiments, the height (h) may be between 50 percent and 90 percent of the height (H). In embodiments, the height (H) may be up to half an inch, although this is not intended to be limiting.

In embodiments, the bulk material 210 may be disposed in the spaces between the resonator chambers 504 of the resonator core 206. In embodiments, the bulk material may be disposed in the gap 208 and the spaces between the resonator chambers 504 of the resonator core 206, although this is not intended to be limiting.

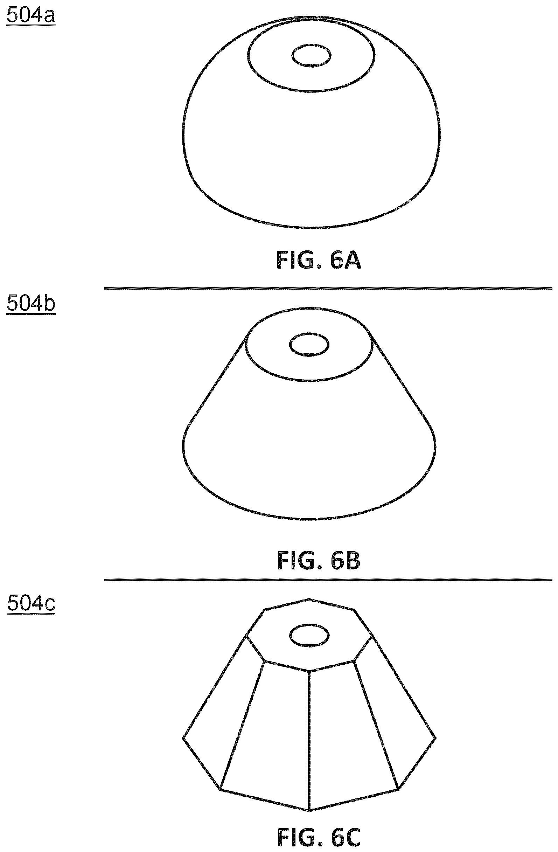

Referring now to FIGS. 6A-6C, the resonator chamber 504 is described, in accordance with one or more embodiments of the present disclosure. The resonator chamber 504 may include a variety of shapes. For example, the resonator chamber 504 may include a hemisphere shaped resonator chamber 504a, a truncated-cone shaped resonator chamber 504b, a right octagonal frustrum shaped resonator chamber 504c, and the like. It is further contemplated that the resonator chamber 504 may include any right n-agonal frustrum shaped resonator chamber. For instance, the right n-agonal frustrum may include, but is not limited to, triangular frustums, square frustums, pentagonal frustums, hexagonal frustums, and the like.

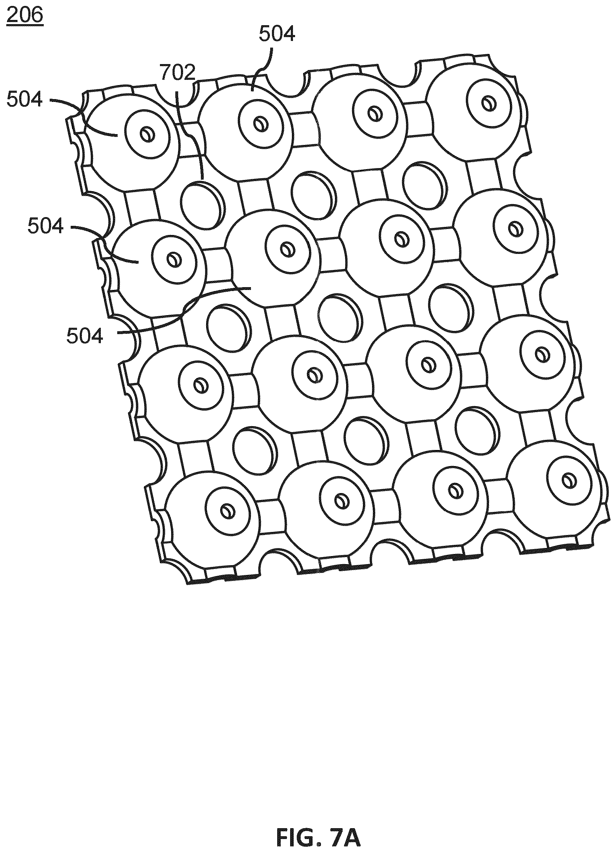

Referring now to FIGS. 7A-7B, the resonator core 206 is described, in accordance with one or more embodiments of the present disclosure. In embodiments, the resonator core 206 may define holes 702. The holes 702 may be defined by the unit cells 402. The holes 702 may be positioned between the resonator chambers 504. For example, four of the resonator chambers 504 may form a square shape with adjacent resonator chambers. The holes 702 may be disposed in the center of the square shape defined by the four resonator chambers. The arrangement of the resonator chambers 504 and the holes 702 may be referred to as a centered rectangular lattice. The centered rectangular lattice may switch between the resonator chambers 504 and the holes 702 in each row and column of the lattice.

Although the resonator core 206 is described as including the holes 702, this is not intended as a limitation of the present disclosure. The resonator core 206 may or may not include the holes 702. It is contemplated that the holes 702 may be beneficial to reduce a weight of the resonator core 206 while providing minimal impact on the acoustic dampening characteristics of the resonator core 206.

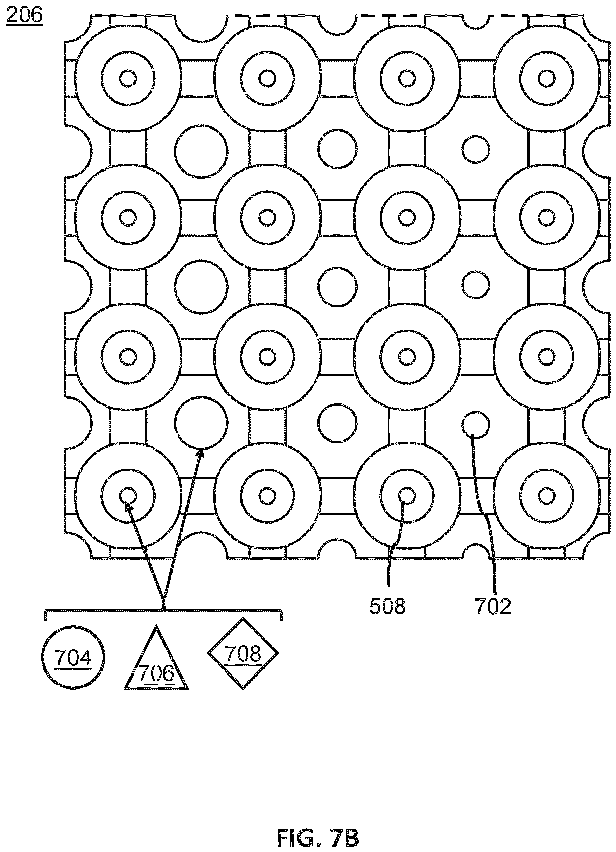

Referring now in particular to FIG. 7B, the holes 508 and/or the holes 702 may include a size. In embodiments, the size of the holes 508 and/or the holes 702 may vary across the resonator core 206. In this regard, the holes 508 and/or the holes 702 may include a non-uniform hole pattern. The non-uniform hole pattern may refer to changing the size of the holes. The non-uniform hole pattern may allow the resonator core 206 to include a locally varying acoustic performance.

In embodiments, the holes 508 and/or the holes 702 may include a shape, such as, but not limited to, circular holes 704, triangular holes 706, rectangular holes (e.g., square holes, prism holes 708), and the like.

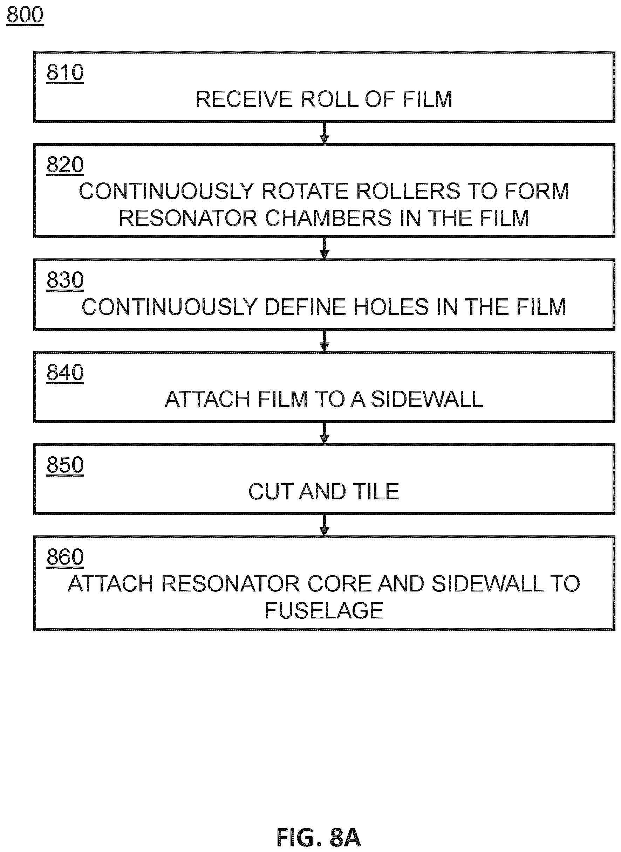

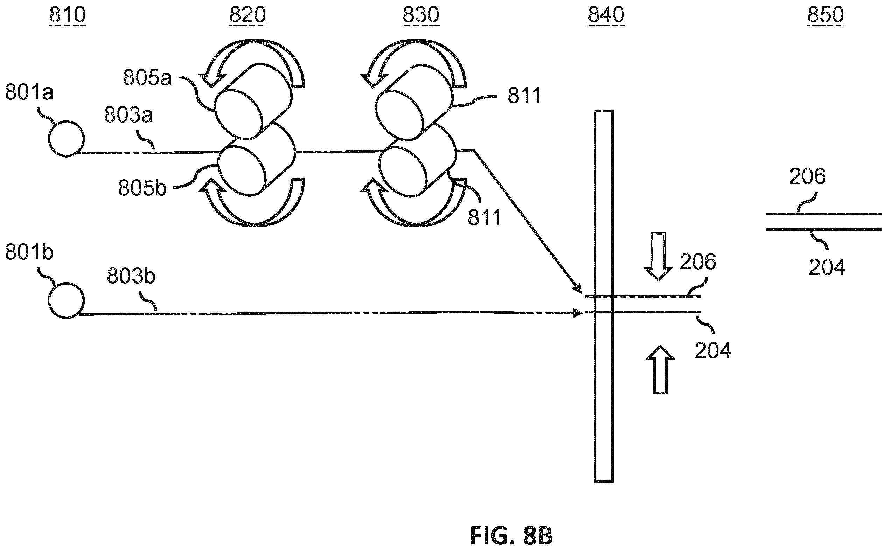

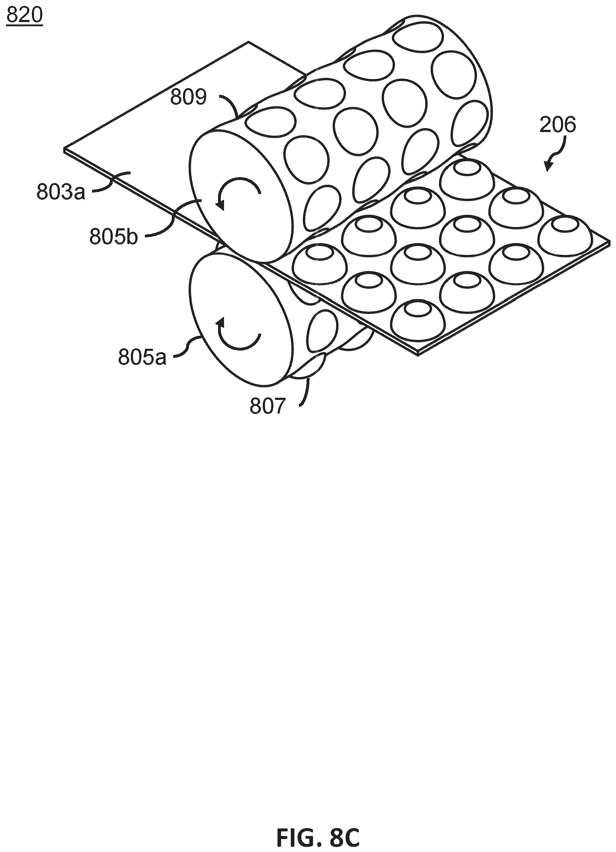

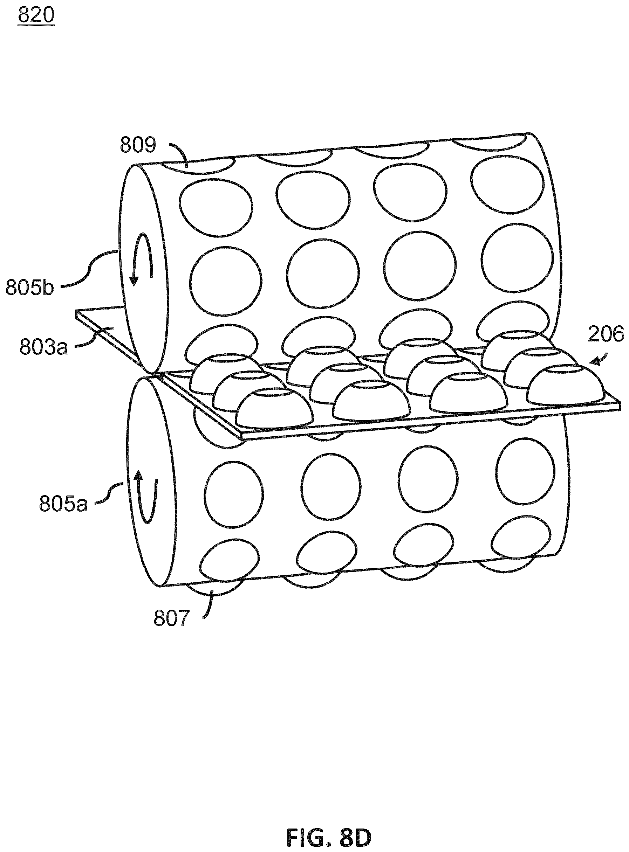

Referring now to FIGS. 8A-8D, a method 800 is described, in accordance with one or more embodiments of the present disclosure. The method 800 may be a method of manufacturing the acoustic panel 200. In embodiments, the resonator core 206 may be formed of a continuous sheet. For example, the resonator core 206, including any of the various features described, may be formed of a continuous sheet using the method. In embodiments, one or more steps of the method may be implemented by a thermoforming machine.

In a step 810, rolls 801 of film 803 are received. The film 803 may also be referred to as a sheet. As depicted, a first roll 801a of a first film 803a and a second roll 801b of a second film 803b are received. The film 803a may be used to fabricate the resonator core 206. The film 803b may be used to fabricate the second sidewall 204. Receiving the rolls 801 of film 803 may include unwinding the film 803 from the roll 801. The first film 803a and the second film 803b may continually move in a direction away from the first roll 801a and the second roll 801b, respectively, during the forming process.

The film 803 may include a material, such as, but not limited to, a plastic material (e.g., thermoplastic material, thermoset material), a metal material, and the like. For example, the thermoplastic material may include any number of plastics, such as, but not limited to, ABS, PVC, flame retardant ABS (FR-ABS), and a variety of other formulations. In embodiments, the film 803 may include the plastic material. The thermoplastic material may include long strand and/or short strand (e.g., chopped) fiber reinforcement embedded therein. Examples of fiber reinforcement include, but are not limited to, fiberglass, carbon fiber and aramid fiber.

Receiving the roll 801 of film 803 may also include heating the film 803. For example, the plastic film may be heated subsequent to unwinding the film 803 from the roll 801. The plastic film may be heated to a temperature. For example, the plastic film may be heated to a temperature at or below the glass transition temperature of the plastic material.

In a step 820, the rollers 805 (e.g., a first roller 805a, second roller 805b) are continuously rotated to form the resonator chambers 504 in the rectangular lattice in the film 803a. The step 820 may also be referred to as continuous feature forming.

The film 803a may be received between the first roller 805a and the second roller 805b. The first roller 805a and the second roller 805b may operate in a two-high configuration. The two-high configuration may include the first roller 805a placed directly over the second roller 805b. The first roller 805a and the second roller 805b may each rotate in opposite directions with the film 803a being between the first roller 805a and the second roller 805b. The first roller 805a and the second roller 805b may rotate at a same speed to prevent slippage of the film. The first roller 805a and the second roller 805b may also be referred to as longitudinal rollers. The rollers 805 may be cylindrical rollers. The rollers 805 may include a cylindrical surface defined along the longitude of the rollers 805. The rollers 805 may be maintained at fixed positions relative to each other as the rollers 805 are rotated. The rollers 805 may continually form the sidewalls 510 by continually rotating during the forming process.

The rollers 805 may include protrusions 807 extending outward from the cylindrical surface of the rollers 805. The rollers 805 may also include dimples 809 extending inward from the cylindrical surface of the rollers 805. For example, the first roller 805a may include the protrusions 807 and the second roller 805b may include the dimples 809. The protrusions 807 and the dimples 809 may extend radially outwards and radially inwards, respectively, from an outer circumferential surface. The protrusions 807 and the dimples 809 may be arranged on the rollers 805 with a select pitch. The protrusions 807 may also be referred to as positive features. The dimples 809 may also be referred to as negative features or cavities. The protrusions 807 may press the film 803a into the dimples 809. The protrusions 807 may press the film 803a into the dimples 809 to form the resonator chambers 504. The protrusions 807 may force the film 803a to stretch into the dimples 809. The rollers 805 may form the sidewalls 510 by stretching the film 803a into the dimples 809.

In embodiments, dimples 809 may define one or more vacuum openings. The step 820 may include pulling a vacuum on the film 803a in the dimples 809. The vacuum on the film 803a may be pulled by suctioning air through each of the dimples 809 (e.g., by way of the vacuum openings in the dimples 809). In this regard, the film 803a may be sucked or pulled into the dimples 809 by the vacuum (i.e., in combination with being pressed into the dimples 809 by the protrusions 807). The vacuum on the film 803a may include a perfect vacuum or a partial vacuum.

The shape of the protrusions 807 and the dimples 809 may control the shape of the resonator chambers 504. In this regard, the protrusions 807 and the dimples 809 may include any of the various shapes described previously herein, such as, but not limited to, a hemisphere shape, a truncated-cone shape, a right n-agonal frustrum, and the like. The resonator chambers 504 may then be imprinted with the shape. Similarly, the arrangement of the protrusions 807 and the dimples 809 may define the arrangement of the unit cells 402.

In embodiments, the film 803 may be pre-heated before entering the rollers 805. In this regard, the film 803 may be in a soft state before entering the rollers 805. The rollers 805 may be at a lower temperature than the film 803. The rollers 805 may then cool the film 803. The rollers 805 may cool the film 803 to preserve the shape of the film 803. The film 803 may be cooled such that the film 803 retains the shape of the resonator chambers 504 imprinted by the rollers 805 upon leaving the rollers 805. The rollers 805 may cool the film 803 below the glass transition temperature.

In a step 830, holes may be continuously defined in the film 803. The holes may be continuously defined in the film 803 by continuously punching out the holes. For example, the holes may be continuously punched out by rollers 811. The holes may also be continuously defined in the film 803 by laser drilling the holes in the film 803a. The holes may include the holes 508 defined in the top surface of the resonator chamber 504. The holes may also include the holes 702 positioned between the resonator chambers 504. In some instances, the step 830 may be an optional step in the method.

The holes 508 and holes 702 may be created after the step 820. The film 803 may be easier to stretch into the dimples 809 before forming the holes. If the holes are created before stretching the film on the rollers 805, then the shape of the holes may be lost during the stretching. Maintaining accurate control of the shape of the holes may be desirable to ensure attenuation of a select frequency.

In a step 840, the film 803a is attached to the film 803b. The film 803a may be attached to the film 803b by a weld or an adhesive bond. For example, the step 840 may include a welding process, such as, but not limited to, ultrasonic welding, laser welding, and the like. The welding techniques may be solid-state welding or fusion welding, depending on the materials selected for forming the different portions of the container. Solid state welding may include hot or cold pressure welding, friction stir pot welding, high frequency induction seam welding, advanced flash butt welding, projection spot welding or magnetically impelled arc butt welding processes. By way of another example, the step 840 may include an adhesive bonding process, such as, but not limited to, applying a plastic adhesive or resin between the film 803a and the film 803b followed by compressing the film 803a against the film 803b. In embodiments, the film 803a may be the resonator core 206 and the film 803b may be the second sidewall 204. The step 840 may then include attaching the resonator core 206 to the second sidewall 204.

In embodiments, the step 810, the step 820, the step 830, and the step 840 may be considered a continuous process.

In a step 850, film 803a and the film 803b may be cut. The film 803a and the film 803b may be cut laterally. The film 803a and the film 803b may be cut when the film 803a and the film 803b reach a desired length (e.g., based on a desired length of the acoustic panel 200).

The step 850 may also include tiling together the film 803a and the film 803b in stacks above other resonator core 206 and sidewall 204 pairs. The resonator core 206 and sidewall 204 pairs may be tiled by a pick-and-place robot or the like.

In a step 860, the resonator core 206 and second sidewall 204 pairs may then be attached to the first sidewall 202. In some instances, resonator core 206 and second sidewall 204 pairs are attached to the first sidewall 202 in situ or in the aircraft 100. For example, the first sidewall 202 may be the fuselage 106 of the aircraft 100. The resonator core 206 and second sidewall 204 may then be coupled within the aircraft 100 to the fuselage 106. The resonator core 206 and second sidewall 204 may be coupled to the fuselage 106 by one or more fasteners or the like.

It is contemplated that the method 800 may provide a number of advantages over other manufacturing methods. For example, the method 800 may be a manufacturing method for the resonator core 206 that is cost effective and/or scalable. Additionally, the resonator core 206 may be formed from a single film.

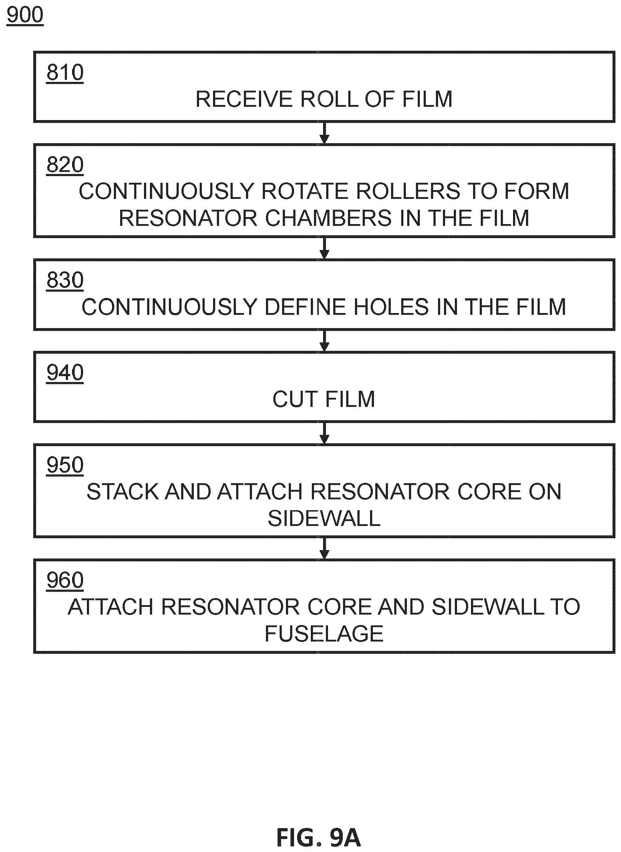

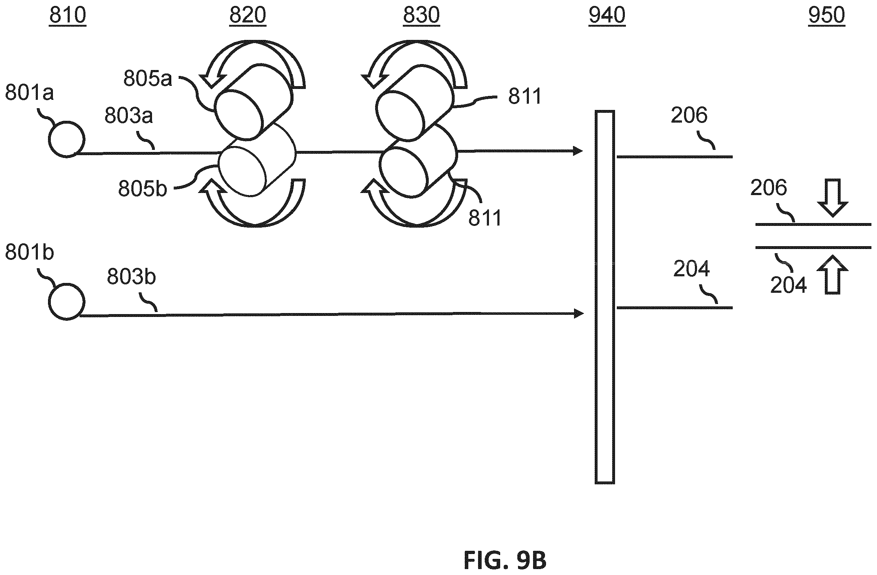

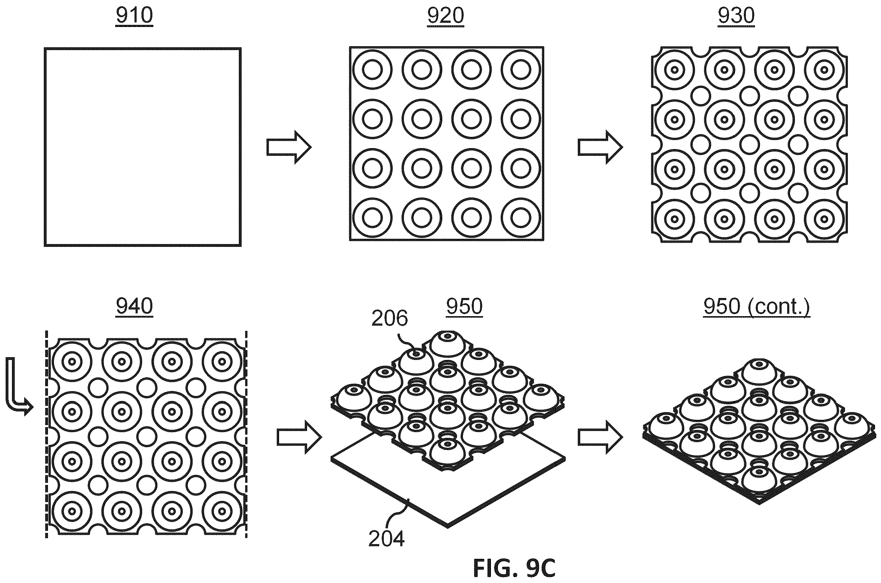

Referring now to FIGS. 9A-9C, a method 900 is described in accordance with one or more embodiments of the present disclosure. The method 900 may be a method of manufacturing the acoustic panel 200. In embodiments, the resonator core 206 may be formed of a continuous sheet. For example, the resonator core 206, including any of the various features described, may be formed of a continuous sheet using the method. In embodiments, one or more steps of the method may be implemented by a thermoforming machine.

The method 900 may include a step 910. The step 910 may be the same as the step 810. The discussion of the step 810 is incorporated herein by reference in the entirety as to the step 910.

The method 900 may include a step 920. The step 920 may be the same as the step 820. The discussion of the step 820 is incorporated herein by reference in the entirety as to the step 920.

The method 900 may include a step 930. The step 930 may be the same as the step 830. The discussion of the step 830 is incorporated herein by reference in the entirety as to the step 930.

In a step 940, the film 803a and the film 803b may be cut. The film 803a and the film 803b may be cut laterally. The film 803a and the film 803b may be cut when the film 803a and the film 803b reach a desired length (e.g., based on a desired length of the acoustic panel 200). The film 803a may be cut to form the resonator core 206. The film 803b may be cut to form the second sidewall 204.

In a step 950, the resonator core 206 may be stacked on the second sidewall 204. For example, the resonator core 206 may be stacked on the second sidewall 204 by a pick-and-place robot or the like. The stacking may also include a step of aligning the resonator core 206 with the second sidewall 204.

The step 950 may include attaching the resonator core 206 to the second sidewall 204. The resonator core 206 may be attached to the second sidewall 204 by a weld or an adhesive bond. For example, the step 950 may include a welding process, such as, but not limited to, ultrasonic welding, laser welding, and the like. By way of another example, the step 950 may include an adhesive bonding process, such as, but not limited to, applying a plastic adhesive or resin between the resonator core 206 and the second sidewall 204 followed by compressing the resonator core 206 against the second sidewall 204.

The method 900 may include a step 960. The step 960 may be the same as the step 860. The discussion of the step 860 is incorporated herein by reference in the entirety as to the step 960.

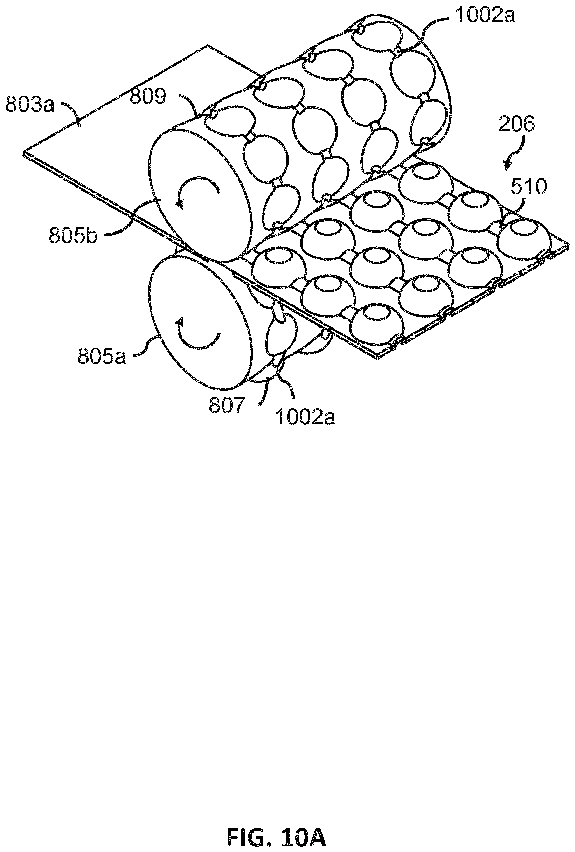

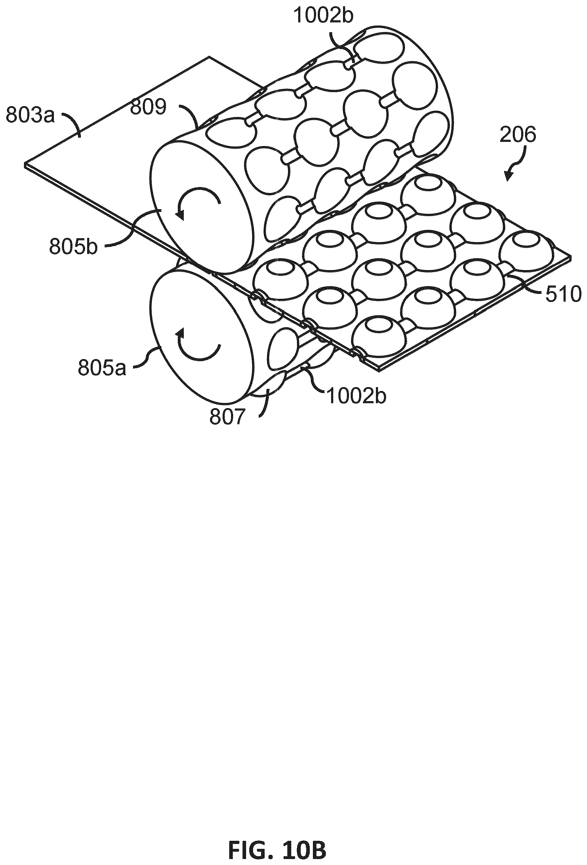

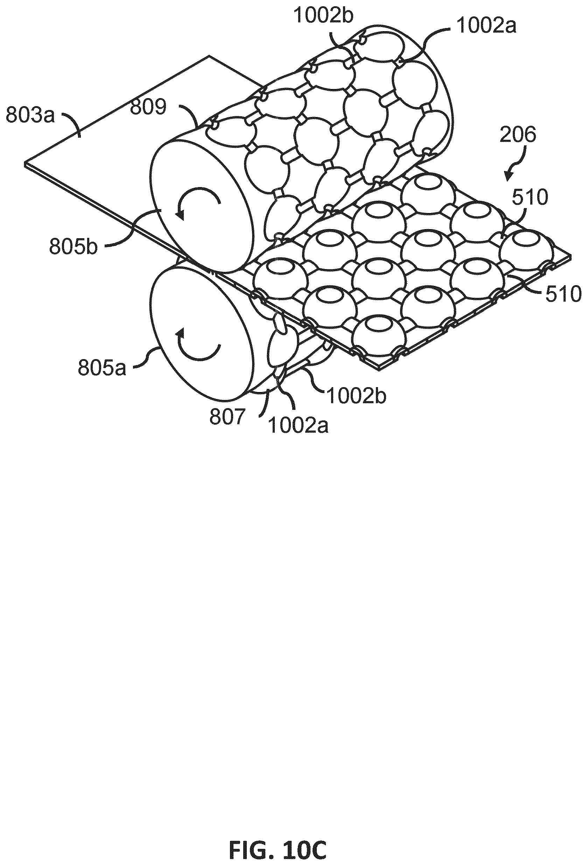

Referring now to FIGS. 10A-10C, a layout of the rollers 805 are described, in accordance with one or more embodiments of the present disclosure. The rollers 805 include interconnect features 1002. The interconnect features 1002 form the interconnections 506 in the resonator core 206. For example, the roller 805a may include interconnect features 1002 which protrude from the cylindrical surface of the roller 805a. The interconnect features 1002 of the roller 805a may connect between the protrusions 807. By way of another example, the roller 805b may include interconnect features 1002 which are recessed from the cylindrical surface of the roller 805b. The interconnect features 1002 may connect between the dimples 809. The interconnect features 1002 of the roller 805a may press down the film 803a into the interconnect features 1002 of the roller 805b to form the interconnections 506.

In embodiments, the rollers 805 may include interconnect features 1002a. The interconnect features 1002a may be disposed around the circumference of the rollers 805. The interconnect features 1002a may form the interconnections 506 longitudinally along the resonator core 206 between the resonator chambers 504.

In embodiments, the rollers 805 may include interconnect features 1002b. The interconnect features 1002b may be disposed along the length of the rollers 805. The interconnect features 1002b may form the interconnections 506 laterally along the resonator core 206 between the resonator chambers 504.

In embodiments, the rollers 805 may include the interconnect features 1002a and the interconnect features 1002b. The resonator core 206 may include the interconnects connecting longitudinally and laterally between the resonator chambers 504. In this regard, the unit cells may be connected to adjacent of the unit cells.

Referring generally again to FIGS. 1-10C.

Although much of the present disclosure is directed to forming the resonator core of a single sheet, this is not intended as a limitation of the present disclosure. In embodiments, the resonator core may be formed of multiple sheets which are joined together. However, forming the resonator core from the single sheet may be advantageous to improve the ease-of-manufacture of the resonator core.

The acoustic panel 200 may be used for noise suppression or attenuation in aerospace applications and other fields. For example, the acoustic panel 200 may be used in cabins or other areas of passenger aircraft. The acoustic panel 200 may be configured to attenuate specific frequencies or wavelengths of noise generated outside an aircraft (e.g., by an engine or airflow over the fuselage) or noise generated within an aircraft (e.g., by personal audio/visual equipment, galley equipment or air management equipment).

## Claims

1. A method (800; 900) comprising:
receiving a roll (801) of a film (803a);
continuously rotating a first roller (805a) and a second roller (805b) to continuously form a plurality of resonator chambers (504) in a rectangular lattice in the film (803a); wherein the plurality of resonator chambers (504) each comprise a volume extending from the film (803a); wherein the first roller (805a) and the second roller (805b) are in a two-high configuration; wherein the first roller (805a) and the second roller (805b) are continuously rotated in opposite directions; wherein the film (803a) is disposed between the first roller (805a) and the second roller (805b); wherein the first roller (805a) and the second roller (805b) are cylindrical rollers; wherein the first roller (805a) comprises a plurality of protrusions (807); wherein the second roller (805b) comprises a plurality of dimples (809); wherein the plurality of protrusions (807) press the film (803a) into the plurality of dimples (809) to continuously form the plurality of resonator chambers (504);
and where the method (800; 900) further comprises one of:
attaching the film (803a) to a second film (803b); and cutting the film and the second film to form a resonator core (206) and a sidewall (204); or
cutting the film (803) to form a resonator core (206); and attaching the resonator core (206) to a sidewall (204);
wherein the resonator core (206) comprises the plurality of resonator chambers (504);
wherein the first roller and the second roller comprise a plurality of interconnect features (1002); wherein the plurality of interconnect features form a plurality of interconnections (506) between the plurality of resonator chambers; and
wherein the plurality of interconnections (506) fluidically couple the plurality of resonator chambers with adjacent resonator chambers.

2. The method of claim 1, wherein the film (803a) comprises a plastic material; wherein receiving the roll (801) of the film (803a) comprises unwinding and heating the film (803a) above a glass transition temperature of the film (803a); wherein the first roller (805a) and the second roller (805b) cool the film (803a) below the glass transition temperature.

3. The method of claim 1 or 2, wherein the plurality of protrusions (807) and the plurality of dimples (809) define a shape of the plurality of resonator chambers (504); wherein the shape of the plurality of resonator chambers (504) comprises one of hemisphere shape, a truncated-cone shape, or a right n-agonal frustrum.

4. The method of claim 1, 2 or 3, comprising pulling a vacuum on the film (803a) in the plurality of dimples (809).

5. The method of any preceding claim, comprising defining a plurality of holes (508; 702) in the roll (801) of film (803a) subsequent to forming the plurality of resonator chambers (504).

6. The method of claim 5, wherein the plurality of holes (508; 702) are defined in the roll (801) of film (803a) by punching out the plurality of holes (508; 702).

7. The method of claim 5, wherein the plurality of holes (508; 702) are defined in the roll (801) of film (803a) by laser drilling the plurality of holes (508; 702).

8. The method of claim 5, 6 or 7, wherein the plurality of resonator chambers (504) and the plurality of holes (508; 702) are in a centered rectangular lattice.

9. The method of any of claims 5 to 8, wherein the plurality of holes (508) are defined in a top surface of the plurality of resonator chambers (504).

10. The method of any preceding claim, wherein the resonator core (206) is attached to the sidewall (204) by a weld.

11. The method of any preceding claim, wherein the resonator core (206) is attached to the sidewall (204) by an adhesive bond.

12. The method of any preceding claim, wherein the plurality of interconnect features (1002a) are disposed around a circumference of the first roller (805a) and the second roller (805b), wherein the plurality of interconnect features (1002a) form the plurality of interconnections (506) longitudinally along the resonator core (206) between the plurality of resonator chambers (504).

13. The method of any preceding claim, wherein the plurality of interconnect features (1002b) are disposed along a length of the first roller (805a) and the second roller (805b), wherein the plurality of interconnect features (1002b) form the plurality of interconnections (506) laterally along the resonator core (206) between the plurality of resonator chambers (504).

## Patentansprüche

1. Verfahren (800; 900), umfassend:
Empfangen einer Rolle (801) einer Folie (803a);
kontinuierliches Drehen einer ersten Walze (805a) und einer zweiten Walze (805b) zum kontinuierlichen Bilden einer Vielzahl von Resonatorkammern (504) in einem rechteckigen Gitter in der Folie (803a); wobei die Vielzahl von Resonatorkammern (504) jeweils ein Volumen aufweist, das sich von der Folie (803a) erstreckt; wobei die erste Walze (805a) und die zweite Walze (805b) in einer Zwei-Hoch-Konfiguration sind; wobei die erste Walze (805a) und die zweite Walze (805b) kontinuierlich in entgegengesetzte Richtungen gedreht werden; wobei die Folie (803a) zwischen der ersten Walze (805a) und der zweiten Walze (805b) angeordnet ist; wobei die erste Walze (805a) und die zweite Walze (805b) zylindrische Walzen sind; wobei die erste Walze (805a) eine Vielzahl von Vorsprüngen (807) umfasst; wobei die zweite Walze (805b) eine Vielzahl von Vertiefungen (809) umfasst; wobei die Vielzahl von Vorsprüngen (807) die Folie (803a) in die Vielzahl von Vertiefungen (809) drückt, um kontinuierlich die Vielzahl von Resonatorkammern (504) zu bilden;
und wobei das Verfahren (800; 900) ferner eines umfasst von:
Befestigen der Folie (803a) an einer zweiten Folie (803b); und
Zuschneiden der Folie und der zweiten Folie zum Bilden eines Resonatorkerns (206) und einer Seitenwand (204); oder
Zuschneiden der Folie (803) zum Bilden eines Resonatorkerns (206); und Befestigen des Resonatorkerns (206) an einer Seitenwand (204);
wobei der Resonatorkern (206) die Vielzahl von Resonatorkammern (504) umfasst;
wobei die erste Walze und die zweite Walze eine Vielzahl von Verbindungsmerkmalen (1002) umfassen; wobei die Vielzahl von Verbindungsmerkmalen eine Vielzahl von Verbindungen (506) zwischen der Vielzahl von Resonatorkammern bildet; und
wobei die Vielzahl von Verbindungsleitungen (506) die Vielzahl von Resonatorkammern fluidisch mit benachbarten Resonatorkammern koppelt.

2. Verfahren nach Anspruch 1, wobei die Folie (803a) ein Kunststoffmaterial umfasst; wobei das Empfangen der Rolle (801) der Folie (803a) das Abwickeln und Erhitzen der Folie (803a) über eine Glasübergangstemperatur der Folie (803a) umfasst; wobei die erste Walze (805a) und die zweite Walze (805b) die Folie (803a) unter die Glasübergangstemperatur abkühlen.

3. Verfahren nach Anspruch 1 oder 2, wobei die Vielzahl von Vorsprüngen (807) und die Vielzahl von Vertiefungen (809) einen Verlauf der Vielzahl von Resonatorkammern (504) definieren; wobei der Verlauf der Vielzahl von Resonatorkammern (504) eines von einem Halbkugelverlauf, einem Kegelstumpfverlauf oder einem rechten n-eckigen Kegelstumpf umfasst.

4. Verfahren nach Anspruch 1, 2 oder 3, umfassend das Erzeugen eines Vakuums auf der Folie (803a) in der Vielzahl von Vertiefungen (809).

5. Verfahren nach einem der vorhergehenden Ansprüche, umfassend Definieren einer Vielzahl von Löchern (508; 702) in der Rolle (801) der Folie (803a) nach dem Bilden der Vielzahl von Resonatorkammern (504).

6. Verfahren nach Anspruch 5, wobei die Vielzahl von Löchern (508; 702) in der Rolle (801) der Folie (803a) durch Ausstanzen der Vielzahl von Löchern (508; 702) definiert ist.

7. Verfahren nach Anspruch 5, wobei die Vielzahl von Löchern (508; 702) in der Rolle (801) der Folie (803a) durch Laserbohren der Vielzahl von Löchern (508; 702) definiert ist.

8. Verfahren nach Anspruch 5, 6 oder 7, wobei die Vielzahl von Resonatorkammern (504) und die Vielzahl von Löchern (508; 702) in einem zentrierten rechteckigen Gitter sind.

9. Verfahren nach einem der Ansprüche 5 bis 8, wobei die Vielzahl von Löchern (508) in einer oberen Oberfläche der Vielzahl von Resonatorkammern (504) definiert ist.

10. Verfahren nach einem der vorhergehenden Ansprüche, wobei der Resonatorkern (206) durch eine Schweißnaht an der Seitenwand (204) befestigt ist.

11. Verfahren nach einem der vorhergehenden Ansprüche, wobei der Resonatorkern (206) durch eine Haftbindung an der Seitenwand (204) befestigt ist.

12. Verfahren nach einem der vorhergehenden Ansprüche, wobei die Vielzahl von Verbindungsmerkmalen (1002a) um einen Umfang der ersten Walze (805a) und der zweiten Walze (805b) angeordnet ist, wobei die Vielzahl von Verbindungsmerkmalen (1002a) die Vielzahl von Verbindungen (506) in Längsrichtung entlang des Resonatorkerns (206) zwischen der Vielzahl von Resonatorkammern (504) bildet.

13. Verfahren nach einem der vorhergehenden Ansprüche, wobei die Vielzahl von Verbindungsmerkmalen (1002b) entlang einer Länge der ersten Walze (805a) und der zweiten Walze (805b) angeordnet ist, wobei die Vielzahl von Verbindungsmerkmalen (1002b) die Vielzahl von Verbindungen (506) in Längsrichtung entlang des Resonatorkerns (206) zwischen der Vielzahl von Resonatorkammern (504) bildet.

## Revendications

1. Procédé (800 ; 900), comprenant :
la réception d'un rouleau (801) d'un film (803a) ;
la rotation continue d'un premier rouleau (805a) et d'un second rouleau (805b) pour former en continu une pluralité de chambres de résonateur (504) dans un réseau rectangulaire dans le film (803a) ; dans lequel la pluralité de chambres de résonateur (504) comprennent chacune un volume s'étendant à partir du film (803a) ; dans lequel le premier rouleau (805a) et le second rouleau (805b) sont dans une configuration à double hauteur ;
dans lequel le premier rouleau (805a) et le second rouleau (805b) tournent en continu dans des directions opposées ; dans lequel le film (803a) est disposé entre le premier rouleau (805a) et le second rouleau (805b) ; dans lequel le premier rouleau (805a) et le second rouleau (805b) sont des rouleaux cylindriques ;
dans lequel le premier rouleau (805a) comprend une pluralité de protubérances (807) ; dans lequel le second rouleau (805b) comprend une pluralité d'alvéoles (809) ; dans lequel la pluralité de protubérances (807) pressent le film (803a) dans la pluralité d'alvéoles (809) pour former en continu la pluralité de chambres de résonateur (504) ;
et où le procédé (800 ; 900) comprend en outre l'une des opérations suivantes :
la fixation du film (803a) à un second film (803b) ; et la découpe du film et du second film pour former un cœur de résonateur (206) et une paroi latérale (204) ; ou
la découpe du film (803) pour former un cœur de résonateur (206) ; et la fixation du cœur de résonateur (206) à une paroi latérale (204) ;
dans lequel le cœur de résonateur (206) comprend la pluralité de chambres de résonateur (504) ;
dans lequel le premier rouleau et le second rouleau comprennent une pluralité d'éléments d'interconnexion (1002) ; dans lequel la pluralité d'éléments d'interconnexion forment une pluralité d'interconnexions (506) entre la pluralité de chambres de résonateur ; et
dans lequel la pluralité d'interconnexions (506) couplent de manière fluidique la pluralité de chambres de résonateur avec des chambres de résonateur adjacentes.

2. Procédé selon la revendication 1, dans lequel le film (803a) comprend un matériau plastique ; dans lequel la réception du rouleau (801) du film (803a) comprend le déroulement et le chauffage du film (803a) au-dessus d'une température de transition vitreuse du film (803a) ; dans lequel le premier rouleau (805a) et le second rouleau (805b) refroidissent le film (803a) en dessous de la température de transition vitreuse.

3. Procédé selon la revendication 1 ou la revendication 2, dans lequel la pluralité de protubérances (807) et la pluralité d'alvéoles (809) définissent une forme de la pluralité de chambres de résonateur (504) ; dans lequel la forme de la pluralité de chambres de résonateur (504) comprend une d'une forme hémisphérique, d'une forme de cône tronqué ou d'un tronc de cône droit à n côtés.

4. Procédé selon la revendication 1, 2 ou 3, comprenant la création d'un vide sur le film (803a) dans la pluralité d'alvéoles (809).

5. Procédé selon une quelconque revendication précédente, comprenant la définition d'une pluralité de trous (508 ; 702) dans le rouleau (801) de film (803a) après la formation de la pluralité de chambres de résonateur (504).

6. Procédé selon la revendication 5, dans lequel la pluralité de trous (508 ; 702) sont définis dans le rouleau (801) de film (803a) par perforation de la pluralité de trous (508 ; 702).

7. Procédé selon la revendication 5, dans lequel la pluralité de trous (508 ; 702) sont définis dans le rouleau (801) de film (803a) par perçage laser de la pluralité de trous (508 ; 702).

8. Procédé selon la revendication 5, 6 ou 7, dans lequel la pluralité de chambres de résonateur (504) et la pluralité de trous (508 ; 702) sont dans un réseau rectangulaire centré.

9. Procédé selon l'une quelconque des revendications 5 à 8, dans lequel la pluralité de trous (508) sont définis dans une surface supérieure de la pluralité de chambres de résonateur (504).

10. Procédé selon une quelconque revendication précédente, dans lequel le cœur de résonateur (206) est fixé à la paroi latérale (204) par une soudure.

11. Procédé selon une quelconque revendication précédente, dans lequel le cœur de résonateur (206) est fixé à la paroi latérale (204) par une liaison adhésive.

12. Procédé selon une quelconque revendication précédente, dans lequel la pluralité d'éléments d'interconnexion (1002a) sont disposés autour d'une circonférence du premier rouleau (805a) et du second rouleau (805b), dans lequel la pluralité d'éléments d'interconnexion (1002a) forment la pluralité d'interconnexions (506) longitudinalement le long du cœur de résonateur (206) entre la pluralité de chambres de résonateur (504).

13. Procédé selon une quelconque revendication précédente, dans lequel la pluralité d'éléments d'interconnexion (1002b) sont disposés le long d'une longueur du premier rouleau (805a) et du second rouleau (805b), dans lequel la pluralité d'éléments d'interconnexion (1002b) forment la pluralité d'interconnexions (506) latéralement le long du cœur de résonateur (206) entre la pluralité de chambres de résonateur (504).
